Europäisches Patentamt

**European Patent Office**

**Office européen des brevets**

(11) Publication number: **0 077 190**
A2

(12) **EUROPEAN PATENT APPLICATION**

(21) Application number: **82305363.2**

(22) Date of filing: **08.10.82**

(51) Int. Cl.³: **C 22 B 25/02, C 22 B 25/08**

(30) Priority: **09.10.81 AU 1126/81**

(43) Date of publication of application: **20.04.83**
**Bulletin 83/16**

(84) Designated Contracting States: **AT BE CH DE FR GB IT LI LU NL SE**

(71) Applicant: **UNISEARCH LIMITED, 221-227 Anzac Parade, Kensington New South Wales, 2033 (AU)**

(72) Inventor: **Young, David Ronald, 35 Cambourne Avenue, St. Ives New South Wales (AU)**

(74) Representative: **Arnold, Carol Alice et al, Abel & Imray Northumberland House 303-306 High Holborn, London WC1V 7LH (GB)**

(54) **Method and apparatus for the smelting and fuming of tin concentrates.**

(57) A method and apparatus for the reduction and fuming of tin concentrates, tin slags and other tin bearing materials in a closed submerged arc furnace provided with a stirrer which acts to stir molten slag in the furnace to produce a vortex acting to transfer hot slag from the vicinity of the tips of the furnace electrodes to the vortex region, the furnace being constructed to permit carbonaceous material to be fed into the region of the vortex and to enable gas to be taken off from the furnace to a gas cleaning system. The apparatus is provided additionally with a gas inlet in the vicinity of the vortex region and a secondary combustion chamber in which gas from the furnace is oxidised and thereafter returned to the furnace, the object of the invention being to obtain high thermal efficiency, high metal recovery, efficient reagent utilisation and a minimum of gaseous pollution emission.

- 1 -

## Method and Apparatus for the Smelting
## and Fuming of Tin Concentrates

This invention relates to a method and apparatus for the reduction and fuming of tin concentrates, tin slags, and other tin bearing materials.

The objectives of this invention are to provide a method and apparatus for attaining high thermal efficiency, high metal recovery, efficient reagent utilization and a minimum of gaseous pollution emission.

In conventional tin smelting or reduction, tin concentrates are mixed with a solid carbonaceous reductant such as a coke and a flux to obtain a fluid slag. This charge is dropped through openings in the roof of a reverberatory furnace and smelted at a temperature of 1200 to 1300°C. The smelting takes approximately twenty hours and during this time the charge is rabbled several times to accelerate the reduction and smelting and to prevent the build up of refractory lumps on the hearth of the furnace. Rabbling requires a team of labourers and is hot, heavy manual work. In addition it involves opening doors in the side of the furnace and through which air is sucked into the furnace. This air is undesirable because it decreases the reducing nature of the atmosphere in the furnace.

The products from the smelting operation are tin, which goes to the refinery, and a slag containing ten to twenty-five per cent tin which is granulated. In addition, there is a large volume of combustion gas which must be cooled and treated to recover the entrained tin fume.

The slag from the first stage of smelting contains too much tin to be discarded and is resmelted. In the second smelting the slag is mixed with more coke and flux and a higher temperature of about 1400°C is used. The products from this operation are an iron-tin alloy which is recycled to the first smelting stage, a slag containing one to two per cent tin and a large volume of combustion gas which must be cooled and treated to recover tin fume. The slag from this operation is discarded or recycled for a third stage of smelting.

The development of the above multistage smelting was evolved to minimise the concurrent reduction of iron and maximise the recovery of tin. The following chemical equation represents the distribution of iron and tin between the metal and slag phases.

$$Fe\ O_{(Slag)} + Sn_{(Metal)} = Sn\ O_{(Slag)} + Fe_{(Metal)}$$

The equilibrium constant for this reaction:-

$$K = \frac{a_{Fe} \cdot a_{Sno}}{a_{Sn} \cdot a_{FeO}}$$

is such that to obtain tin metal with a low iron content it is necessary to tolerate a high tin loss in the slag. In a balanced tin smelting circuit the amount of iron entering the tin concentrates must equal the amount leaving in the discard slag. Because of the previously mentioned iron-tin equilibrium between the metal and slag a given amount of tin must be lost to the final discard slag. The recovery of tin is therefore strongly dependent on the iron and tin contents of the concentrates.

A number of processes have been proposed to obtain a better smelting performance than the reverberatory furnace.

American Patent No. 3,905,807 describes a process for smelting and reduction of tin concentrates and slags whereby a submerged fuel lance is used to heat and agitate the molten system.

West German Patent No. 2747586 describes a process for smelting tin concentrates in a reactor containing a cyclone smelting unit and a horizontal slag reduction chamber in which there are a series of parallel gas lances through the roof.

Australian Patent No. 502,603 describes a process for smelting tin concentrates and recovering tin from tin bearing slags in an electric furnace. The recovery of tin from the slag is accelerated by agitating the melt by a flow of gaseous products from the incomplete combustion of a carbonaceous fuel.

All of these processes use pneumatic injection to agitate the molten slag and accelerate the rate of reduction. Two major disadvantages of using a pneumatic method to reduce tin slags are that this method also produces favourable conditions for tin fuming and the exit gases must of necessity contain a significant amount of tin, carbon monoxide and hydrogen. These impose an added load on the gas cleaning equipment and increase the fume circulating load.

Another approach to increase the rate of reduction of non-ferrous slags is to use a water cooled, metal bladed, mechanical stirrer. Amman et al American Patent No. 3,857,700 describes a process for recovering copper from copper bearing slags using such a stirrer.

One major disadvantage of this method of obtaining increased rates of reduction is that the impeller cooling system extracts a large amount of heat from the slag in a position where it is desirable to utilize all the available heat for smelting and slag reduction.

In all these processes the tin distribution is controlled by the previously discussed iron-tin slag metal relationship.

One method of overcoming the restrictions of the above relationship is to fume the tin from the slag. In the fuming process iron pyrites concentrate is added to the molten slag to convert the tin content into a volatile tin sulphide. The hot gas from the fuming vessel is burned with air to convert the tin sulphide to tin oxide and after cooling the fume is collected. The fume is agglomerated and recycled to the concentrate smelting process. This process allows the tin content of the slag to be reduced to between 0.1 to 0.3 per cent and overcomes the problems of the iron-tin distribution.

There are two major problems with this process. The waste gases contain a large amount of sulphur dioxide and if not treated produce atmospheric pollution.

The iron pyrites used for sulphidization frequently contains small amounts of lead, zinc, and arsenic compounds which also fume off. As well as presenting a potential atmosphere pollution problem these compounds concentrate in the tin fume and must be removed in the tin refining operation.

The present invention provides an apparatus for the reduction of tin bearing slags in which the reduction is accelerated by agitation of the melt with mechanical stirrers. The apparatus is such that it can be utilised for the additional step of tin fuming utilising a gas circulation system such that the sulphur requirements for fuming are decreased, the amount of sulphur bearing gas discharged to the atmosphere or treated is decreased, and the contamination of the fume by tramp elements such as lead, arsenic, zinc, etc. is minimised.

The present invention consists in an apparatus for reduction of tin bearing slags consisting of a closed submerged arc furnace having uncooled mechanical stirrer means arranged in the furnace in a position such that on actuation of said stirrer means a vortex is produced in a molten slag in the furnace acting to transfer hot slag from the vicinity of electrode tips of the furnace to the vortex region, means to permit the feeding of carbonaceous material into the region of the vortex and a gas offtake line from the interior of the furnace leading to a gas cleaning system for dust and fume collection. Preferably the apparatus includes also as a means of additionally fuming tin bearing slags remaining in the furnace following reduction, a gas inlet in the vicinity of the vortex region, means for recirculating gas from the gas cleaning system to the inlet and means in the gas line to oxidise gases from the furnace.

The invention also consists in a method of reducing tin bearing slags in a closed submerged arc furnace consisting in the steps of:

(a)   charging the furnace with a load of molten slag from a tin smelting operation;

(b)   energising the electrodes of the furnace to pass a heating current through the slag to maintain a fluid slag bath;

(c)   lowering stirring means into the molten slag bath and stirring the molten slag to produce a vortex acting to transfer hot slag from the vicinity of the electrode tips to the vortex region;

(d)   feeding a charge of carbonaceous material into the bath in the region of the vortex to obtain a reduction of the tin from the slag;

(e)   continuing heating and stirring until approximately 2% tin remains in the slag;

(f)   ceasing stirring and allowing metal tin to separate from the slag; and

(g)   running out metal tin from the furnace.

A method according to the invention may include the following additional steps:

(a)   recommencing stirring the molten slag remaining in the furnace to entrain residual carbonaceous material, floating on the surface of the slag;

(b)   introducing a charge of sulphide bearing material capable of producing tin sulphide into the furnace in the region of the vortex;

(c)   extracting gas from the furnace and oxidising it to convert tin sulphide to tin oxide and sulphur dioxide;

(d)   passing the extracted gas through a gas cleaning system to collect tin oxide fume; and

(e)   recirculating sulphur bearing gases back to the furnace.

The stirring means should be such that it can be readily removed from the furnace to allow the replacement of worn blades.  The drive shaft of the stirrer should be made from a material which has good high temperature strength and oxidation resistance. The alloy UMCO 50 is suitable for this purpose. The blade of the stirrer may be made from such materials as silicon carbide, graphite, carbon bearing refractories, cermets or castable refractories. The composition of these materials should be selected to obtain the best economic life. The stirrer speed should be adjustable.

In order that the invention may be better understood and put into practice a preferred form thereof is hereinafter described by way of example with reference to the accompanying diagrammatic drawings in which:

Fig. 1 is a sectional view of apparatus according to the invention;

Fig. 2 is a plan view thereof,

Fig. 3 is a flow sheet of a tin reduction and fuming plant incorporating the invention; ·

Fig. 4 is a flow sheet illustrating the carrying out of the process according to the invention; and

Fig. 5 is a graph illustrating the relative rates of tin and iron reduction from slag in a process according to the invention.

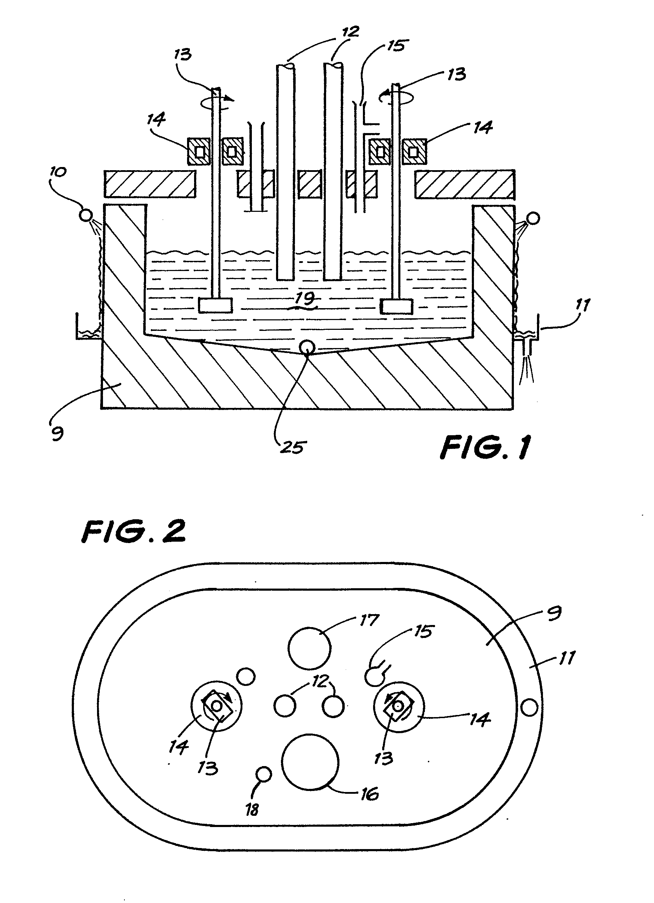

The apparatus illustrated in Figs. 1 and 2 consists essentially of a conventional closed submerged arc furnace. The furnace consists of a refractory lining 9 which is provided with a spray 10 by means of which cooling water is sprayed on the external surface of furnace and is collected and discharged from a drain 11. Such a cooling means is considered desirable in view of the fact that agitation of the slag in the furnace in carrying out a method according to the invention makes it desirable to protect the refractory lining of the furnace against slag erosion by providing additional cooling. Electrodes 12 project through the furnace top in a conventional manner and on either side of these are a pair of mechanically rotated stirrers 13 that project downwardly into molten slag 19 contained within the furnace. Water coolant seals 14 are provided around the stirrer shafts where they pass through the furnace top. As indicated in Fig. 2 the stirrers 13 are rotated in opposite directions to produce a vortex within the molten slag 19 acting to transfer hot slag from the vicinity of the tips of the electrodes 12 to the vortex region. Further particulars in connection with the stirrers are given below.

In the furnace top there is also a feed port 15 through which carbonaceous material can be fed into the vortex region of the molten slag. This acts also as a gas return port. A gas take off port is provided at 16, a sample opening at 17 and a thermo-couple at 18.

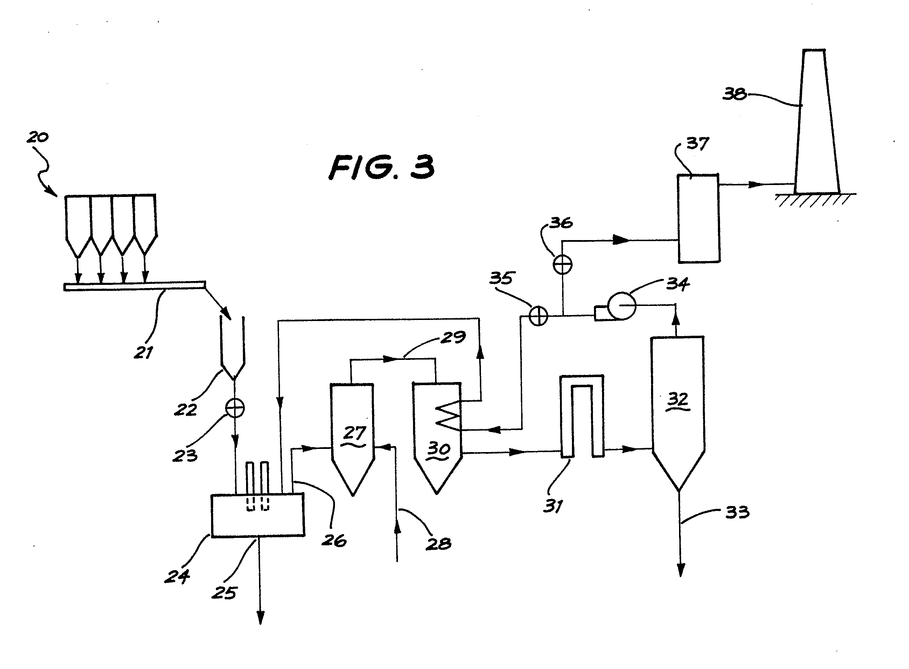

Fig. 3 illustrates a complete tin slag plant within which the apparatus described above can be used. This consists of a series of bunkers 20 for coal pyrites, slag and sulphur feeding into a screw conveyor 21 by means of which the content of anyone of the bunkers may be fed to the furnace hopper 22 and thence through a feeder 23 into the furnace 24. The construction of which is described in connection with Figs. 1 and 2. Waste slag and iron tin alloy are drawn from the tap hole 25 of the furnace as required. Gas is drawn off from the furnace through the line 26 to the secondary combustion chamber 27 into which oxygen may be fed through the line 28. Oxidised gases pass through the line 29 to the heat exchanger 30 through which a return line to the furnace 24 passes so that gas recirculated to the furnace through the return line can be reheated. Gases from furnace pass out of the heat exchange of 30 to the cooler 31 thence to the bag house 32 from which oxide fume can be drawn through the line 33. The gases are then recirculated by the gas pump 34 through gas valve 35 or passed through gas valve 36 to the $SO_2$ scrubber 37 and thence to the stack 38.

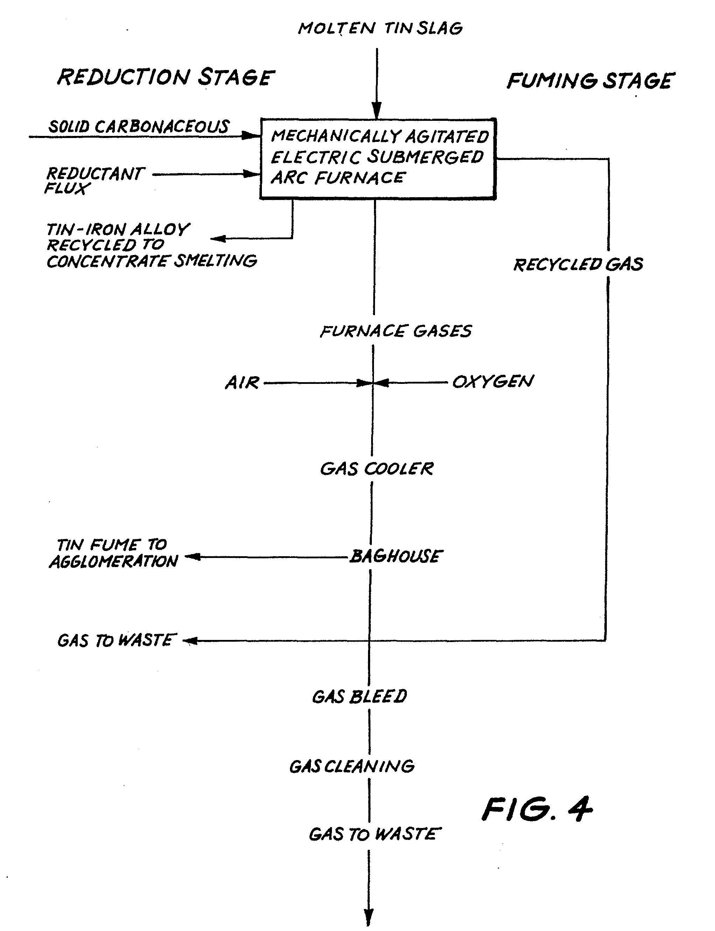

The essential process steps for the batch treatment of tin slags are as follows and summarized in Figure 4:-

1.  The molten slag produced in the smelting of tin concentrates is transferred to the furnace 24.

2.  The furnace electrodes 12 are lowered into the molten slag bath and the power turned on.

3.  The stirrer blades are preheated by holding them above the slag bath and then lowering them into it.

4.  Rotation of the stirrers 13 is commenced and the speed increased to obtain a vortex in the slag bath.

5.  The electric power to the furnace is adjusted to maintain a temperature between 1200 to 1250°C in the slag bath.

6.  Solid carbonaceous material such as coal, coke or charcoal and limestone flux are fed into the vortex produced by the stirring of the slag. The action of the vortex and the movement of the particles under the slag surface produces favourable conditions for utilization of the volatile matter evolved from the carbonaceous reductant. These conditions produce rapid and efficient reduction of the slag.

7.  The amount of carbonaceous reductant used should be sufficient to leave a residual coke skeleton layer on the surface of the unstirred slag at the end of the reduction stage. The tin content of the slag at the end of the reduction stage should be two to five per cent. The amount of reductant and the time is established empirically.

8.  The gases from the reduction process are mixed with air in the secondary combustion of chamber 27 and burned as they leave the furnace. Part of the heat content of the gas is recovered in the heat exchanger 30.

9.  The gases are cooled and filtered in the baghouse 32 to recover any entrained tin fume. The gases are then discharged to the atmosphere.

10. At the end of the reduction stage the stirrers are stopped and the slag bath allowed to settle. A residual coke layer should be floating on the surface of the molten slag.

11. The furnace taphole 25 is opened and the tin-iron alloy produced by reduction of the slag is run out. As soon as slag starts to leave the furnace the taphole is resealed.

12. The depth of the electrodes and stirrers is readjusted and stirring is recommenced. When it is available granulated slag may be fed into the vortex to increase the bath depth.

13. The power to the furnace is adjusted to maintain a temperature of $1250^{\circ}C$.

14. Elemental sulphur or iron pyrites concentrate is fed into the vortex. The combination of the vortex, the agitation of the slag bath, the residual coke, the added sulphur and the temperature, result in rapid sulphidization and volatilisation of the tin in the slag.

15. The gas leaving the furnace is mixed with oxygen and burned in the secondary combustion chamber 27 to oxidise the tin sulphide to tin oxide and sulphur dioxide.

16. After cooling the gases are filtered in the baghouse 32. A sulphur dioxide detector is used to monitor the sulphur dioxide content of the gases leaving the baghouse. When a significant level of sulphur dioxide is detected the gases from the baghouse are redirected back to the furnace by the gas circulation system.

17. The pressure inside the furnace is maintained slightly below atmospheric pressure by continuously bleeding off part of the circulating gases.

18. The fuming is stopped when the tin content of the slag has been reduced to between 0.1 to 0.3 per cent tin.

19. The slag is tapped from the furnace and after resealing the taphole the next batch of slag is poured into the furnace.

20. The gas circulating system is bypassed and when the sulphur dioxide monitor indicates a low level the gases are again redirected to the atmosphere after passing through the baghouse.

The feasibility of the batch process has been investigated in a single phase electric furnace using three inch diameter electrodes and a furnace configuration similar to that shown in figures one and two.

## EXAMPLE

Approximately 100 kg of tin slag containing 0.9 per cent tin and 14 per cent iron was preheated by a gas burner in an electric furnace with the same configuration as that shown in Figures 1 and 2. 3kg of anthracite coal was placed between the electrodes and the electric power turned on. The preheating was continued until current started to flow between the electrodes. As the slag melted further slag was added between the electrodes. The furnace power was adjusted to obtain a fully fluid bath at a temperature of approximately 1250°C. This temperature refers to the position of the thermocouple shown in Figure 2. The above procedure was necessary to obtain a starting bath of molten slag.

The furnace taphole was opened and approximatelly half the contents of the furnace run out. The furnace was then resealed and 172 kg of slag containing 18.2 per cent tin and 29.4 per cent iron was added to the furnace. The power to the furnace was adjusted to obtain a fully fluid bath at temperature of 1250°C.

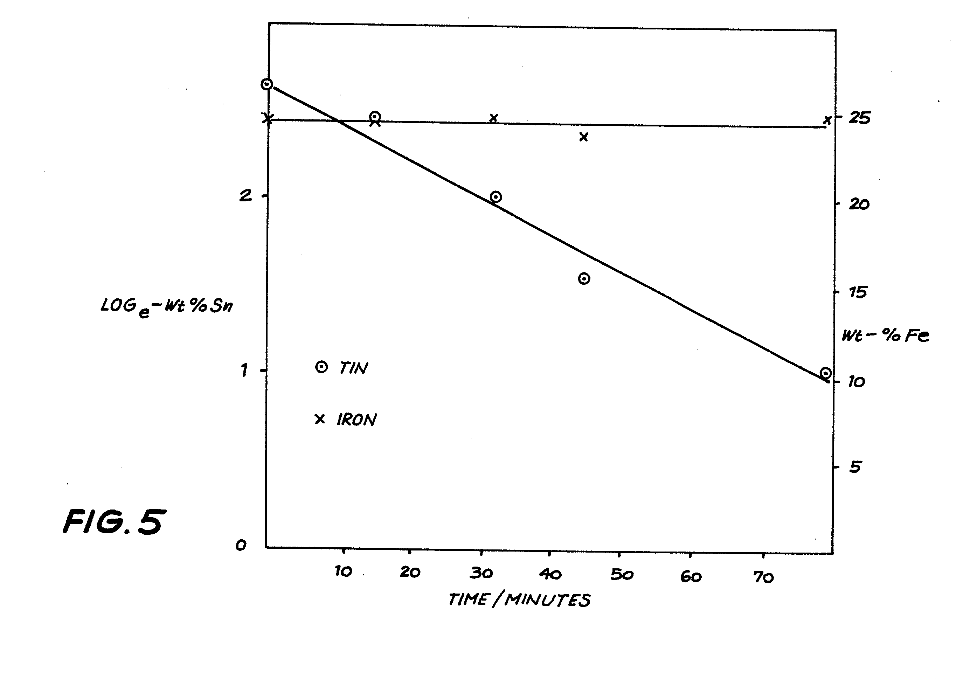

The stirrers were lowered into the furnace and preheated above the molten slag. One stirrer was made of UMCO 50 and the other from graphite. The UMCO 50 paddle blade measured 125 mm diameter, 75mm high and the graphite paddle 125mm diameter, 50mm high. The stirrers were lowered 50mm below the slag surface and stirring commenced. The stirring speed was gradually increased to 390 revolutions per minute and coal added near to the stirrer shaft. 5.5 kg of + 6mm - 13mm coal containing 45 per cent volatile matter and 25 per cent ash was added over a 45 minute period. Samples of the slag bath were obtained by dipping a solid copper rod into it and then quenching in cold water. The results of the tin and iron analysis are shown in Figure 5.

After 60 minutes the gas circulation pump was switched on and the flue gases pumped through the bag house. The baghouse temperature rapidly climbed to 125°C and pumping was stopped to prevent burning the bag material. After 89 minutes the stirring was stopped and the bath allowed to settle for 5 minutes. The furnace was then tapped and the iron-tin alloy run out. When slag started to come out, the taphole was plugged and the power turned on. The stirrers were restarted and the gas circulation system restarted. Two hundred grams of sulphur was added to the furnace adjacent to the stirrers over a 70 minute period. After 202 minutes the gas pumping and stirring was stopped. The power was then turned off and the slag tapped from the furnace.

The results of this experiment indicated the following. The amount of coal required for slag reduction is approximately one quarter of that used in conventional reverberatory practice. A substantial amount of the volatile matter from the coal was utilized in reducing the slag.

The results in Figure 5 indicate that the rate of tin reduction from the slag can be represented as a pseudo first order reaction with a half-life equal to thirty-three minutes. This rate is much faster than that of a conventional furnace.

After the experiment the gas cooling pipe and baghouse were examined. A large quantity of fume was found in the pipework immediately adjacent to the furnace and smaller amount in the subsequent pipework and baghouse. The fume near to the furnace contained 44.6 percent tin and 6.9 per cent sulphur. The latter pipe and baghouse fume contained 65 per cent tin and fifteen per cent sulphur.

The UMCO 50 stirrer was found to be covered with a thin layer of slag but there was no indication of significant attack. The graphite blade was uniformly worn. The edges were rounded and the dimensions were approximately 5mm smaller.

All percentages given herein are given on a weight basis.

Claims :

1. Apparatus for reduction of tin bearing slags consisting of a closed submerged arc furnace having uncooled mechanical stirrer means arranged in the furnace in a position such that on actuation of said stirrer means a vortex is produced in a molten slag in the furnace acting to transfer hot slag from the vicinity of electrode tips of the furnace to the vortex region, means to permit the feeding of carbonaceous material into the region of the vortex and a gas offtake line from the interior of the furnace leading to a gas cleaning system for dust and fume collection.

2. Apparatus as claimed in claim 1 for additionally fuming tin bearing slags remaining in the furnace following reduction having a gas inlet in the vicinity of the vortex region, means for recirculating gas from the gas cleaning system to the inlet and means in the gas offtake line to oxidise gases from the furnace.

3. A method of reducing tin bearing slags in a closed submerged arc furnace consisting in the steps of:

(a) charging the furnace with a load of molten slag from a tin smelting operation;

(b) energising the electrodes of the furnace to pass a heating current through the slag to maintain a fluid slag bath;

(c) lowering stirring means into the molten slag bath and stirring the molten slag to produce a vortex acting to transfer hot slag from the vicinity of the electrode tips to the vortex region;

(d) feeding a charge of carbonaceous material into the bath in the region of the vortex to obtain a reduction of the tin from the slag;

(e) continuing heating and stirring until approximately 2% tin remains in the slag;

(f) ceasing stirring and allowing metal tin to separate from the slag; and

(g)    running out metal tin from the furnace.

4.    A method as claimed in claim 3 including the following additional steps:

(a)    recommencing stirring the molten slag remaining in the furnace to entrain residual carbonaceous material, floating on the surface of the slag;

(b)    introducing a charge of sulphide bearing material capable of producing tin sulphide into the furnace in the region of the vortex;

(c)    extracting gas from the furnace and oxidising it to convert tin sulphide to tin oxide and sulphur dioxide;

(d)    passing the extracted gas through a gas cleaning system to collect tin oxide fume; and

(e)    recirculating sulphur bearing gases back to the furnace.

5.    A method as claimed in claim 4 wherein the recirculated sulphur bearing gases are prehated before being recirculated back to the furnace.

FIG.1

FIG.2

0077190

FIG. 3

MOLTEN TIN SLAG

REDUCTION STAGE

FUMING STAGE

SOLID CARBONACEOUS

MECHANICALLY AGITATED
ELECTRIC SUBMERGED
ARC FURNACE

REDUCTANT
FLUX

TIN-IRON ALLOY
RECYCLED TO
CONCENTRATE SMELTING

RECYCLED GAS

FURNACE GASES

AIR ——————→ ←—————— OXYGEN

GAS COOLER

TIN FUME TO
AGGLOMERATION ←——————— BAGHOUSE

GAS TO WASTE ←———————

GAS BLEED

GAS CLEANING

FIG. 4

GAS TO WASTE

FIG.5